(19) Europäisches Patentamt
European Patent Office
Office européen des brevets

(11) **EP 3 420 329 B1**

(12) **EUROPEAN PATENT SPECIFICATION**

(45) Date of publication and mention
of the grant of the patent:
**27.04.2022 Bulletin 2022/17**

(21) Application number: **17711368.5**

(22) Date of filing: **10.02.2017**

(51) International Patent Classification (IPC):
*G01L 1/04* (2006.01)   *G01L 1/22* (2006.01)
*G01D 3/036* (2006.01)   *G01G 23/01* (2006.01)
*G01G 3/14* (2006.01)   *G01L 25/00* (2006.01)

(52) Cooperative Patent Classification (CPC):
**G01L 1/2268; G01L 1/04; G01L 25/00;** G01D 3/036

(86) International application number:
**PCT/NL2017/050081**

(87) International publication number:
**WO 2017/146566 (31.08.2017 Gazette 2017/35)**

(54) **DIGITAL DRIFT CORRECTION**

DIGITALE DRIFTKORREKTUR

CORRECTION NUMÉRIQUE DE LA DÉRIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.02.2016 NL 2016315**

(43) Date of publication of application:
**02.01.2019 Bulletin 2019/01**

(73) Proprietor: **Xyztec BV**
**5981 XC Panningen (NL)**

(72) Inventor: **SYKES, Robert John**
**5981 XC Panningen (NL)**

(74) Representative: **Algemeen Octrooi- en
Merkenbureau B.V.
P.O. Box 645
5600 AP Eindhoven (NL)**

(56) References cited:
EP-A1- 0 454 916      US-A- 4 412 298
US-A- 4 691 290      US-A1- 2009 057 038
US-A1- 2011 023 630

• **Rajesh Dey ET AL: "Creeping and Drifting
Correction of Sensor Using Adaptive Method",
International Journal of Advanced Research in
Electrical Electronics and Instrumentation
Engineering, 31 January 2014 (2014-01-31),
pages 2320-3765, XP055370733, Retrieved from
the Internet:
URL:https://www.ijareeie.com/upload/2014/j
anuary/18K_Creeping.pdf [retrieved on
2017-05-09]**

**Description**

Force measurement is often achieved by measuring the deformation of an elastic element where the deformation is some function of said force. A known problem exists where the deformation is not only a function of the force but also a function of how long the force is applied. The magnitude of the change in deformation due to time is in most cases much less than that caused by the initial deformation when the force is applied but in many cases it will affect the accuracy of a force measurement if the function relating deformation to force does not include how it is affected by time. Such time dependant deformation is commonly known as creep. This invention is for a sensor apparatus and method that enables the effect of signal drift present in a force measurement system to be accounted for and thereby improving the force measurement accuracy.

Methods that account for creep are known but these require hardware that is characterised to have a reverse effect to the creep such that the sum of output and the characterised correction is creep free. Whilst this does offer improvement it is limited to the accuracy of the characterisation in its design and manufacturing consistency. This type of correction is known in the art of designing and applying strain gauges. Some methods convert the force measurement into a digital signal and apply algorithms that include time to make the correction. Such methods though do not allow, or adequately allow, for forces that are continually changing; accounting for creep with a static force being much easier than a force that changes. Part of this disclosure, not forming part of the current invention, is for a specific method that uses an algorithm that can more accurately correct for creep in all cases and including where the force changes.

Document US4691290 discloses a digital scale compensated for creep and drift by first obtaining and storing a mathematical representation of creep and/or drift as a function of time for the particular scale.

Document US2011/023630 discloses a methodology for selecting and properly placing foil strain gages on a transducer in a Wheatstone bridge, which provides a more consistent creep response, especially when the transducer temperature is changed. In the background section the use of a chord slope for quantifying the creep characteristics of load cells, for classification thereof, is disclosed.

In accordance with a first example, not forming part of the current invention, the disclosure provides a method of determining a deformation due to creep in an output of a sensor, comprised by a sensor apparatus, which sensor is measuring a mechanical force, said method comprising the steps of:

- applying a mechanical force to said sensor;
- measuring, in a current measurement, by said sensor, a displacement of said sensor caused by said applied force;
- determining, by a processor component comprised by said sensor apparatus, said deformation due to creep for a next measurement by said sensor, by:
- providing a creep function, wherein said creep function defines said deformation due to creep over time;
- calculating said deformation due to creep for a next measurement, based on:

  - said creep function;
  - a time between:

    c) said current measurement of said sensor, and
    d) said next measurement;
    wherein said time between said current and said next measurement is a small proportion of an overall said measurement time. Said measurement time being typically 1/50 or less than said overall measurement time. In many cases the overall measurement time is continuous and the said time between measurements then goes towards 1/infinity.

  - said measured applied force in said current measurement;
  - a deformation due to creep in said current measurement.

It was the insight of the inventor that the deformation due to creep can be determined as the creep function can be estimated or determined beforehand. When the creep function is known, an estimate can be provided for the deformation due to creep when the four variables are known, i.e. the creep function, the time between the current measurement of the sensor component and the next measurement, the measured applied force in the current measurement and the deformation due to creep in the current measurement.

Based on these examples, the deformation due to creep can be determined for a next measurement.

In a beneficial example of the disclosure, the creep function is an exponential function which further depends on the initially applied force. As long as the creep function is known, and it is known where you are at the creep function with respect to time, then the creep can be determined.

According to the invention there is provided a method for determining an applied mechanical force using an output of a sensor which is measuring said applied mechanical force and in which is said sensor is exposed to a drifting error, according to independent claim 3.

The inventor has found that the output of the sensor may drift over time. Here, the drifting error is determined in the first and the third measurement. The drifting error can be determined in the first and the third measurement as there is no applied force to the sensor at these moments. The drifting error is then interpolated, and the second measurement, i.e. the measurement when a force is applied, is corrected by means of the interpolated drifting error. Multiple second measurements may be taken when an applied force is being measured over a period of time.

Features of the disclosure will be apparent from the following description with reference to the accompanying drawings in which:

Fig. 1 shows a graphical representation of positive creep
Fig. 2 shows a graphical representation of negative creep
Fig. 3 shows a graphical representation for the calculation of the creep at any one measurement.
Fig. 4 shows the same graphical representation as Fig 3 but where the "time zero" for the measurements is normalised about the time axis equal to zero.
Fig. 5 shows a similar case to Fig 4 but where the creep from the previous measurement is negative.
Fig. 6 shows another case similar to Fig 3 but where the creep decreases
Fig. 7 shows a similar case to Fig 6 but where the creep in the previous measurement is greater than that which would occur at time zero.
Fig. 8.1, 8.2 and 8.3 show graphical illustrations of the drift correction method according to the current invention.

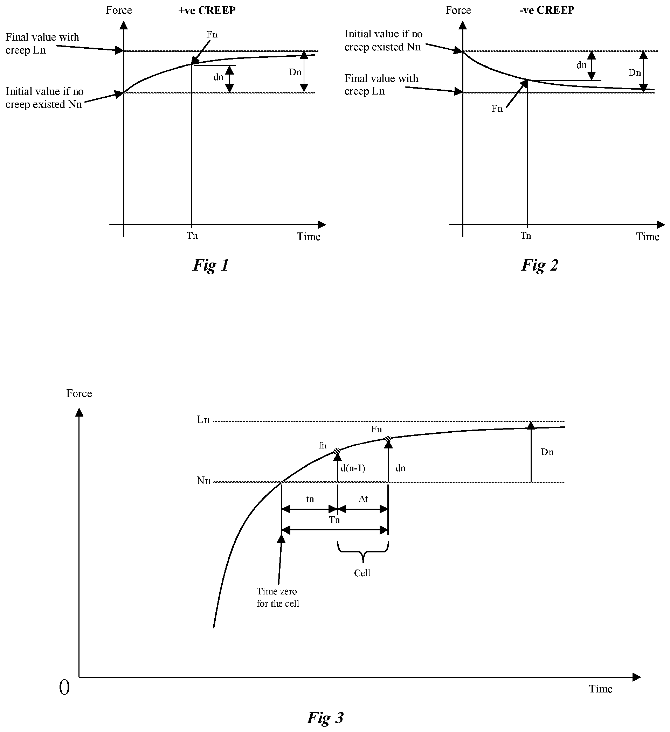

The method of an example, not forming part of the current invention, requires the nature of creep to be defined and calibrated. Fig 1 is a graphical representation of a force sensors output subjected to the instant application of a constant force. The measured force Fn rises to Nn when the force is applied and then creeps by some function of time towards Ln. In the method Dn is defined to be in direct proportion to the initial force Nn, such that,

$$D_n = RN_n$$

Where,
R = the creep constant (is defined as the creep constant)

In some force measurement systems creep is negative, as represented graphically in Fig 2. The characteristics of this are the same as positive creep except that after the forces initial rise to Nn it then falls towards Ln. Negative creep occurs in complex structures where a part of the deformation measurement system creeps more and in an opposite direction to the creep in its main part. Consequently despite a gross positive deformation the creep is negative. This behaviour can be seen in some load cells that use strain gauges. In the method negative creep is defined by a negative value for R.

If the applied load Nn is negative and R is positive Dn will be negative so the creep increases negatively. This is the "mirror image" about the horizontal axis in Fig 1 of the graph of positive creep and means the magnitude of the deformation will increase over time. If the applied load Nn is negative and R is negative the magnitude of creep will decrease, the mirror image of negative creep.

The correction method works from a starting condition where the force sensor has had no load acting on it for sufficient time such that any creep can be assumed to be negligible and equal to zero. Sensor deformation is measured and represented in numeric form. The sensors deformation being taken at set time intervals of $\Delta t$.

Random time intervals of known values are also possible but not preferred. The time between a current measurement and the one that preceded it is referred to as a "cell". Fig 3 is the graphic representation of a cell where the current deformation is fn and includes the current creep d(n-1). The creep dn in the current cell is calculated from the creep of the previous cell d(n-1) plus that which will occur in the current one. To do this we have to calculate a creep curve we are on, which has the equivalent initial force Nn, current creep d(n-1) and current deformation fn. The initial force Nn for each cell is an equivalent initial load where the creep would be zero and then built up to fn in time tn. Once we have Nn and tn we can calculate the creep in the cell from the time tn + $\Delta t$ = Tn. The solutions for Nn, tn and dn are derived from the creep function. As the previous creep d(n-1) and current deformation fn are known the values of Nn and then dn can be solved.

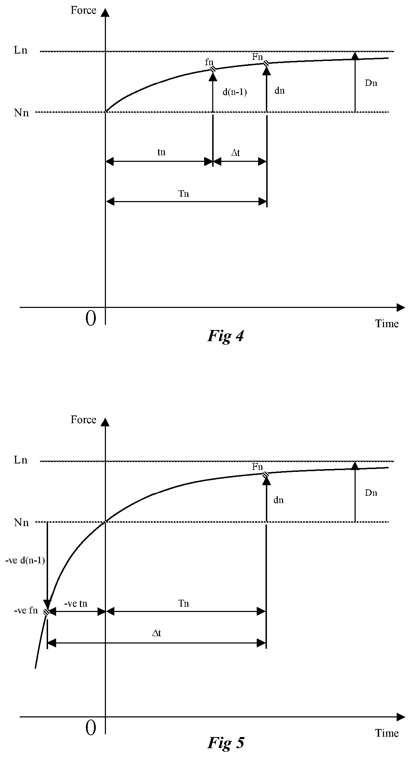

Fig 3 illustrates how the equivalent creep curve for any cell can occupy many places in the absolute force time graph where time started with zero creep. Fig 4 normalises the same equivalent creep curve around its own time zero where deformation fn occurs at tn from time equal to zero. It is possible though that d(n-1) may be negative, as illustrated graphically in Fig 5. In a correct solution of the creep time function such events will "take care of themselves", that is to say entering a negative term for d(n-1) will lead to a negative time tn. In both Fig 4 and Fig 5 the creep is increasing.

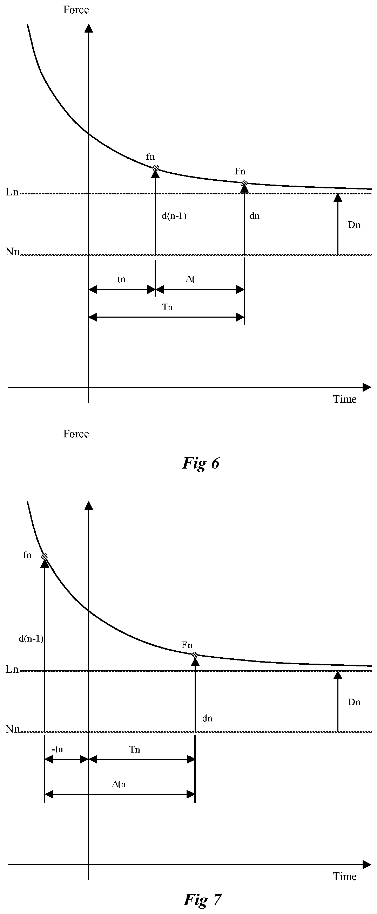

There is also the possibility that the creep may decrease in a cell. This occurs when d(n-1) is larger than the difference between Ln and Nn as illustrated in Fig 6. Again tn may be negative as illustrated in Fig 7.

The possible examples shown in Figs 4, 5, 6 and 7 are for cases where fn is positive. When fn is negative similar cases can occur where the illustration would be mirrored about the time axis of the graph and the signs of the terms reversed. The examples in Figs 4, 5, 6 and 7 also show the case with a positive creep characteristic. Similar examples exist for negative creep as initially shown in Fig 2. In all cases entering the correct signs, positive or negative, for the terms in a correct solution of the creep time function will result in the correct calculation of dn.

If due to creep, the deformation of the sensor is time dependant we have to consider what is the correct deformation, or in other words, the "True" sensor output. From the correction method we have two values Nn and Ln. Nn is the value that the deformation would be at the current point in time if the sensor did not creep. Ln is the value the deformation would be if all the creep at the current point in time had, had time to reach equilibrium. Both Nn and Ln can then be used as values where creep has been accounted for. In a preferred embodiment, for ease of calibrating the sensor, Ln would be used. To calibrate a sensor a known load has to be applied. If a known load is applied rapidly, such that it approximates to instantly, the sensor deformation or output will rise initially to Nn and then if the load is held, the deformation will change under the influence of creep to towards Ln. If the load is held for sufficient time such that the deformation approximates to a constant value both Ln and the creep characteristic can be calibrated. A common problem of using Nn would be when weights are used to apply the known load. In such cases the application of the weight requires accelerations that change the load at the instant of application and hence the instantaneous load is not Nn.

According to an example, the nature of the creep is defined as being exponential but reasonable corrections are possible with other functions that closely resemble the creep characteristic. The expression for the creep characteristic is then,

$$d_n = D_n\left(1 - e^{-Tn/\tau}\right)$$

Where,

  dn= The creep at time Tn
  Dn = The total creep at time infinity
  $\tau$ = The creep time constant

Thus, the creep characteristic is then defined by the two constants $\tau$ and R. A full solution of an exponential characteristic applied to creep using the symbolic representations in Figs 1 to 7 result in the following expressions, If

$$\left(1 - \frac{d_{(n-1)}}{R\left(f_n - d_{(n-1)}\right)}\right) = 0$$

$$d_n = d_{(n-1)}$$

If

$$\left(1 - \frac{d_{(n-1)}}{R\left(f_n - d_{(n-1)}\right)}\right) > 0$$

$$d_n = R\left(f_n - d_{(n-1)}\right)\left(1 - e^{\left(ln\left|1 - \frac{d_{(n-1)}}{R\left(f_n - d_{(n-1)}\right)}\right| - \frac{\Delta t}{\tau}\right)}\right)$$

If

$$\left(1 - \frac{d_{(n-1)}}{R\left(f_n - d_{(n-1)}\right)}\right) < 0$$

$$d_n = R\left(f_n - d_{(n-1)}\right)\left(1 + e^{\left(ln\left|1 - \frac{d_{(n-1)}}{R\left(f_n - d_{(n-1)}\right)}\right| - \frac{\Delta t}{\tau}\right)}\right)$$

And

$$L_n = (1 + R)\left(f_n - d_{(n-1)}\right)$$

It can be seen that the value of dn depends on the "state", of

$$\left(1 - \frac{d_{(n-1)}}{R\left(f_n - d_{(n-1)}\right)}\right) = 0$$

This is explained by the different states of the creep in the previous measurement as discussed with reference to Figs 4, 5, 6, and 7. Also as previously mentioned, the need to find out the current "state" becomes apparent in the correct solution to the assumed creep function, which in this case is exponential. Knowing $\Delta t$, R, $\tau$, fn and d(n-1) these expressions can be used to calculate dn and Ln for any cell.

$\Delta t$ is the time between the current and next cell. In a preferred embodiment $\Delta t$ is constant for all cells.

fn and d(n-1) are the current deformation and previous creep respectively. R and $\tau$ are calculated from a calibration symbolised in Fig 1 or Fig 2 dependent on type of creep characteristic by the following expressions

$$R = \frac{Ln - Nn}{Nn}$$

$$\tau = \frac{-T_n}{ln\left(\frac{Ln - F_n}{Ln - Nn}\right)}$$

Alternatively R and $\tau$ can be found by trial and error with reference to a known loading condition.

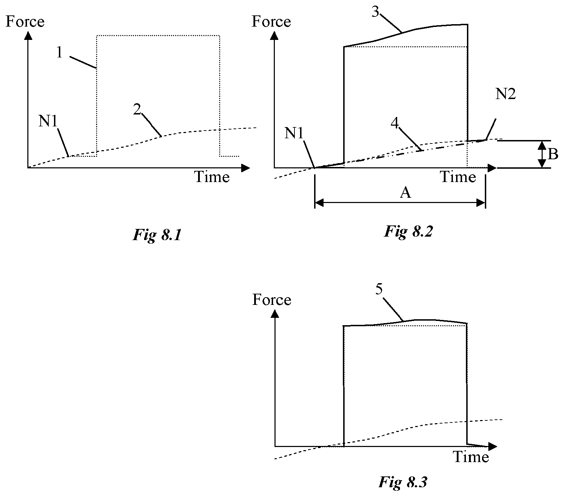

According to the invention there is a sensor apparatus and method for the minimization of drift according to appended claims 1 and 3 respectively. Errors in the output of force measurement systems can come from many sources. Some errors like creep can be reduced. Another common cause of error results from variations in temperature. The effects of temperature can, and often are, accounted for and reduced. Other sources of error may be unknown and those accounted for can only be reduced; they cannot be eliminated. If a sensor is left without any load on it and the zero output recorded one will have variations. This variation is referred to as null drift, (null being the output with no load), and is the second example of the disclosure. Null drift also changes the output with a load applied by a similar amount. One method of reducing the effect of null drift is well known and sometimes referred to as "a tare". A common example is when the no load output of a weighing device is set to zero. This eliminates the null error when the weight is then applied. This method eliminates any null error at the time when it is done but null drift can continue from that point and error is once again introduced. This disclosure is for a method of taking two nulls, as will be demonstrated with reference to Figs 8.

Fig 8.1 illustrates a rapidly applied constant load 1, which is then held for a time and then rapidly removed. The principle applies equally to any load time function but this "step input" shape illustrated helps in the explanation. If the load were not applied the null output of the sensor would drift as illustrate by line 2. As is already known to the skilled person the sensor output can be nulled at N1 eliminating the error at that point in time. In this example the drift continues such that it significantly affects the sensor output during the load application. The effect on the load is shown in Fig 8.2 as line 3. Although the null error was initially eliminated at N1 by re-zeroing the sensor, the drift continues to affect the sensor output thought the load application. The method of the disclosure is to take a second null N2 after the load application. In the illustration the magnitude of the null error at N2 is B. This error is then subtracted from the sensor output at this point and in linear proportion to line 4 at all points of the output up to N1 where the null error will already be zero. The effect of subtracting the null error in proportion to the two nulls N1 and N2 is illustrated as line 5 in Fig 8.3. Any drift that is none linear between the two null points is not corrected but any gross change and its linear component is corrected. Whilst line 5 is not exactly like the true load application 1, it is a closer representation.

**Claims**

1. Sensor apparatus for determining an applied mechanical force using an output of a sensor which is measuring said applied mechanical force in which said sensor is exposed to a drifting error, said sensor apparatus comprising a sensor and a processor component, wherein said sensor apparatus is arranged for:

   - measuring, in a first measurement, by said sensor of said sensor apparatus, said applied force when no force is applied;
   - nulling, by a processor component comprised by said sensor apparatus, said measured applied force in said first measurement;
   - measuring, in a second measurement, by said sensor by said sensor apparatus, during applying of a mechanical force to said sensor;
   - measuring, in a third measurement, by said sensor, said applied force when no mechanical force is applied to said sensor, therewith obtaining a drifting error that occurred between said first and third measurement;
   - nulling, by said processor component, said measured applied force in said third measurement;
   - correcting said second measurement by an interpolated value,

   said interpolated value being provided by interpolating, by said processor component, the obtained drifting error between said first measurement and said third measurement with respect to time, for said second measurement.

2. Sensor apparatus for determining an applied mechanical force to a sensor according to claim 1, wherein said processor component is arranged for linearly interpolating between said first measurement and said third measurement.

3. A method for determining an applied mechanical force using an output of a sensor which is measuring said applied mechanical force and in which is said sensor is exposed to a drifting error, said method being performed by a sensor apparatus comprising said sensor and a processor component, said method comprising the subsequent steps of:

   - measuring, in a first measurement, by said sensor of said sensor apparatus, said applied force when no force is applied;
   - nulling, by said processor component comprised by said sensor apparatus, said measured applied force in said first measurement;
   - applying a mechanical force to said sensor;
   - measuring, in a second measurement, by said sensor by said sensor apparatus, said applied force;
   - stop applying said mechanical force to said sensor;
   - measuring, in a third measurement, by said sensor, said applied force when no force is applied to said sensor, therewith obtaining a drifting error that occurred between said first and third measurement;
   - nulling, by said processor component, said measured applied force in said third measurement;
   - correcting said second measurement by an interpolated value, said interpolated value being provided by interpolating, by said processor component, the obtained drifting error between said first measurement and said third measurement, with respect to time, for said second measurement.

4. A method for determining an applied mechanical force according to claim 3, wherein said step of interpolating comprises:

   - linearly interpolating between said first measurement and said third measurement.

5. A method according to any of the claims 3 - 4, wherein said method is performed by a bond tester apparatus for determining a strength of a bond and/or a material.

**Patentansprüche**

1. Sensorvorrichtung zum Bestimmen einer ausgeübten mechanischen Kraft unter Verwendung einer Ausgabe eines Sensors, der die ausgeübte mechanische Kraft misst, wobei der Sensor einem Driftfehler unterliegt, wobei die Sensorvorrichtung einen Sensor und eine Prozessorkomponente umfasst, wobei die Sensorvorrichtung eingerichtet ist zum:

   - Messen, in einer ersten Messung, durch den Sensor der Sensorvorrichtung, der ausgeübten Kraft, wenn keine Kraft ausgeübt wird;
   - Nullsetzen, durch eine Prozessorkomponente, die in der Sensorvorrichtung enthalten ist, der in der ersten Messung gemessenen ausgeübten Kraft;
   - Messen, in einer zweiten Messung, durch den Sensor durch die Sensorvorrichtung, während Ausüben einer mechanischen Kraft auf den Sensor;
   - Messen, in einer dritten Messung, durch den Sensor, der ausgeübten Kraft, wenn keine mechanische Kraft auf den Sensor ausgeübt wird, wodurch ein Driftfehler erhalten wird, der zwischen der ersten und der dritten Messung aufgetreten ist;
   - Nullsetzen, durch die Prozessorkomponente, der gemessenen ausgeübten Kraft in der dritten Messung;
   - Korrigieren der zweiten Messung durch einen interpolierten Wert,

   wobei der interpolierte Wert durch zeitliches Interpolieren, durch die Prozessorkomponente, des erhaltenen Driftfehlers zwischen der ersten Messung und der dritten Messung für die zweite Messung geliefert wird.

2. Sensorvorrichtung zum Bestimmen einer ausgeübten mechanischen Kraft nach Anspruch 1, wobei die Prozessorkomponente eingerichtet ist zum linearen Interpolieren zwischen der ersten Messung und der dritten Messung.

3. Verfahren zum Bestimmen einer ausgeübten mechanischen Kraft unter Verwendung einer Ausgabe eines Sensors, der die ausgeübte mechanische Kraft misst, wobei der Sensor einem Driftfehler unterliegt, wobei das Verfahren durch eine Sensorvorrichtung, die einen Sensor und eine Prozessorkomponente umfasst, durchgeführt wird, wobei das Verfahren die nachfolgenden Schritte umfasst zum:

   - Messen, in einer ersten Messung, durch den Sensor der Sensorvorrichtung, der ausgeübten Kraft, wenn keine Kraft ausgeübt wird;
   - Nullsetzen, durch eine Prozessorkomponente, die in der Sensorvorrichtung enthalten ist, der in der ersten Messung gemessenen ausgeübten Kraft;
   - Ausüben einer mechanischen Kraft auf den Sensor;
   - Messen, in einer zweiten Messung, durch den Sensor durch die Sensorvorrichtung, der ausgeübten Kraft;
   - Stoppen des Ausübens der mechanischen Kraft auf den Sensor;
   - Messen, in einer dritten Messung, durch den Sensor, der ausgeübten Kraft, wenn keine Kraft auf den Sensor ausgeübt wird, wodurch ein Driftfehler erhalten wird, der zwischen der ersten und der dritten Messung aufgetreten ist;
   - Nullsetzen, durch die Prozessorkomponente, der gemessenen ausgeübten Kraft in der dritten Messung;
   - Korrigieren der zweiten Messung durch einen interpolierten Wert, wobei der interpolierte Wert durch zeitliches Interpolieren, durch die Prozessorkomponente, des erhaltenen Driftfehlers zwischen der ersten Messung und der dritten Messung für die zweite Messung geliefert wird.

4. Verfahren zum Bestimmen einer ausgeübten mechanischen Kraft nach Anspruch 3, wobei der Schritt des Interpolieren Folgendes umfasst:

   - lineares Interpolieren zwischen der ersten Messung und der dritten Messung.

5. Verfahren nach einem der Ansprüche 3-4, wobei das Verfahren durch eine Fügetestervorrichtung zum Bestimmen einer Festigkeit einer Zusammenfügung und/oder eines Materials durchgeführt wird.

**Revendications**

1. Appareil capteur pour déterminer une force mécanique appliquée en utilisant une sortie d'un capteur qui mesure ladite force mécanique appliquée où ledit capteur est exposé à une erreur de dérive, ledit appareil capteur comprenant un capteur et un composant processeur, dans lequel ledit appareil capteur est arrangé pour :

- la mesure, dans une première mesure, par ledit capteur dudit appareil capteur, de ladite force appliquée lorsqu'aucune force n'est appliquée ;
- l'annulation, par un composant processeur compris dans ledit appareil capteur, de ladite force appliquée mesurée dans ladite première mesure ;
- la mesure, dans une deuxième mesure, par ledit capteur dudit appareil capteur, lors de l'application d'une force mécanique audit capteur ;
- la mesure, dans une troisième mesure, par ledit capteur, de ladite force appliquée lorsqu'aucune force mécanique n'est appliquée audit capteur, obtenant ainsi une erreur de dérive qui s'est produite entre lesdites première et troisième mesures ;
- l'annulation, par ledit composant processeur, de ladite force appliquée mesurée dans ladite troisième mesure ;
- la correction de ladite deuxième mesure par une valeur interpolée,

ladite valeur interpolée étant fournie par interpolation, par ledit composant processeur, de l'erreur de dérive obtenue entre ladite première mesure et ladite troisième mesure par rapport au temps, pour ladite deuxième mesure.

2. Appareil capteur pour déterminer une force mécanique appliquée à un capteur selon la revendication 1, dans lequel ledit composant processeur est agencé pour effectuer une interpolation linéaire entre ladite première mesure et ladite troisième mesure.

3. Procédé pour déterminer une force mécanique appliquée en utilisant une sortie d'un capteur qui mesure ladite force mécanique appliquée et où ledit capteur est exposé à une erreur de dérive, ledit procédé étant réalisé par un appareil capteur comprenant ledit capteur et un composant processeur, ledit procédé comprenant les étapes suivantes de :

- mesure, dans une première mesure, par ledit capteur dudit appareil capteur, de ladite force appliquée lorsqu'aucune force n'est appliquée ;
- annulation, par ledit composant processeur compris dans ledit appareil capteur, de ladite force appliquée mesurée dans ladite première mesure ;
- application d'une force mécanique audit capteur ;
- mesure, dans une deuxième mesure, par ledit capteur dudit appareil capteur, de ladite force appliquée ;
- arrêt d'application de ladite force mécanique audit capteur ;
- mesure, dans une troisième mesure, par ledit capteur, de ladite force appliquée lorsqu'aucune force n'est appliquée audit capteur, obtenant ainsi une erreur de dérive qui s'est produite entre lesdites première et troisième mesures ;
- annulation, par ledit composant processeur, de ladite force appliquée mesurée dans ladite troisième mesure ;
- correction de ladite deuxième mesure par une valeur interpolée, ladite valeur interpolée étant fournie par interpolation, par ledit composant processeur, de l'erreur de dérive obtenue entre ladite première mesure et ladite troisième mesure, par rapport au temps, pour ladite deuxième mesure.

4. Procédé pour déterminer une force mécanique appliquée selon la revendication 3, dans lequel ladite étape d'interpolation comprend :

- l'interpolation linéaire entre ladite première mesure et ladite troisième mesure.

5. Procédé selon l'une des revendications 3 et 4, dans lequel ledit procédé est réalisé par un appareil de test de liaison pour déterminer une résistance d'une liaison et/ou d'un matériau.

Force    **+ve CREEP**

Final value with
creep Ln

Fn

Initial value if no
creep existed Nn

dn

Dn

Tn            Time

*Fig 1*

Force    **-ve CREEP**

Initial value if no
creep existed Nn

dn

Dn

Final value with
creep Ln

Fn

Tn            Time

*Fig 2*

Force

Ln

fn

Fn

d(n-1)

dn

Dn

Nn

tn

Δt

Tn

Time zero
for the cell

Cell

0

Time

*Fig 3*

Force

Ln ‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑

fn     Fn

d(n-1)    dn      Dn

Nn ‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑

tn    $\Delta t$

Tn

0                 Time

*Fig 4*

Force

Ln ‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑

Fn

Dn

Nn ‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑ dn

-ve d(n-1)

-ve fn    -ve tn      Tn

$\Delta t$

0                 Time

*Fig 5*

*Fig 6*

*Fig 7*

Force

1

N1

2

Time

*Fig 8.1*

Force

3

N1

4

N2

B

Time

A

*Fig 8.2*

Force

5

Time

*Fig 8.3*

EP 3 420 329 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4691290 A

- US 2011023630 A